# EUROPÄISCHE PATENTSCHRIFT

(11) **EP 3 884 554 B1**
(45) Veröffentlichungstag und Bekanntmachung des Hinweises auf die Patenterteilung: **28.09.2022**
(21) Anmeldenummer: 19828229.5
(22) Anmeldetag: 11.12.2019
(51) Int. Cl.: H02G 3/12, H01H 23/14

(54) **ELEKTRISCHES INSTALLATIONSGERÄT**
ELECTRIC INSTALLATION DEVICE
APPAREIL D'INSTALLATION ÉLECTRIQUE

(30) Priorität: 14.12.2018 DE 102018132291
(43) Veröffentlichungstag der Anmeldung: 29.09.2021
(73) Patentinhaber: Schneider Electric Industries SAS, 92500 Rueil-Malmaison (FR)
(72) Erfinder: ANSORGE, Rainer, 51706 Marienheide (DE); NAYAK, Gireesh, 51674 Wiehl (DE); KUMAR, Aravind, 51674 Wiehl (DE)
(74) Vertreter: Manitz Finsterwald Patent- und Rechtsanwaltspartnerschaft mbB
(86) Internationale Anmeldenummer: PCT/EP2019/084584
(87) Internationale Veröffentlichungsnummer: WO 2020/120545

(56) Entgegenhaltungen:
- EP-A1- 1 202 310
- WO-A1-2017/153248
- FR-A1- 2 880 181

## Beschreibung

Die vorliegende Erfindung betrifft ein elektrisches Installationsgerät nach dem Oberbegriff des Anspruchs 1, umfassend einen Schalteinsatz, eine Schaltwippe zur Betätigung des Schalteinsatzes, die um eine Schwenkachse schwenkbar ist, und einen Blendrahmen für die Schaltwippe.

Derartige Installationsgeräte sind allgemein bekannt und umfassen in dem Schalteinsatz einen oder mehrere Schalter oder Taster, die mit der Schaltwippe oder den Schaltwippen betätigt werden können, um beispielsweise eine Raumbeleuchtung, Jalousien oder andere elektrische Einheiten zu schalten.

Installationsgeräte der vorstehend beschriebenen Art werden im Rahmen einer Unterputzmontage üblicherweise in vorhandene Wandöffnungen oder in Einbaudosen eingesetzt und fixiert. Nach erfolgter Montage liegt der Blendrahmen für die Schaltwippe an der Wand an. Gleichzeitig ist jedoch der Schalteinsatz an der Wand fixiert. Hierdurch kann das Problem entstehen, dass der Blendrahmen bei Unebenheiten der Wand oder bei Einsatz von Tapeten, Wandbespannungen oder dergleichen (nachfolgend der Einfachheit halber Tapeten genannt) nicht unmittelbar auf der Wand anliegen kann, sondern von der Wand um die Dicke der Tapeten beabstandet ist. Dies hat wiederum zur Folge, dass auch die Schaltwippe von dem Schalteinsatz um eine solche Distanz beabstandet ist, wodurch eine ordnungsgemäße Befestigung der Schaltwippe bzw. ein zuverlässiges Betätigen des Schalteinsatzes nicht immer gewährleistet ist. Ein solches Gerät ist aus dem Dokument FR 2 880 181 A1 bekannt.

Zur Lösung dieses Problems sind aus dem Stand der Technik diverse Lösungen bekannt, die als Tapetenausgleich bezeichnet werden.

Es ist die Aufgabe der vorliegenden Erfindung, ein elektrisches Installationsgerät nach dem Oberbegriff des Anspruchs 1 zu schaffen, mit dem auf einfache und kostengünstige Weise ein zuverlässiger Tapetenausgleich geschaffen werden kann.

Die Lösung dieser Aufgabe erfolgt durch die Merkmale des Anspruchs 1 und insbesondere dadurch, dass zwischen der Schaltwippe und dem Schalteinsatz ein Koppelelement vorgesehen ist, wobei die Schaltwippe mittels einer spielbehafteten Linearführung in dem Koppelelement in einer Richtung verschiebbar gelagert ist, die in einer zu der Schwenkachse lotrecht verlaufenden Ebene liegt, wobei weiterhin das Koppelelement um eine zur Schwenkachse koaxial oder parallel verlaufende Kippachse verkippbar ist.

Erfindungsgemäß wird der Schalteinsatz des elektrischen Installationsgerätes zwar herkömmlich durch die Schaltwippe betätigt. Allerdings erfolgt die Betätigung unter mechanischer Zwischenschaltung des Koppelelementes. Mit anderen Worten wirkt die Schaltwippe nicht unmittelbar auf den Schalteinsatz ein sondern die Schaltwippe betätigt das Koppelelement, welches wiederum den Schalteinsatz betätigt.

Da sich bei Verwendung von Tapeten ein zusätzlicher Wandaufbau von einigen Millimetern ergeben kann, der nur eine Position des Blendrahmens ermöglicht, die um diesen Abstand von dem an der Wand fixierten Schalteinsatz entfernt ist, ist erfindungsgemäß die Schaltwippe mittels einer Linearführung verschiebbar gelagert. Hierdurch lässt sich die Schaltwippe linear bewegen und zwar in einer Richtung, die in einer zu der Schwenkachse der Schaltwippe lotrecht verlaufenden Ebene liegt. Mit anderen Worten lässt ist die Linearführung so gestaltet, dass die Schaltwippe in Richtung der Wand bzw. von der Wand weg linear verschiebbar ist.

Erfindungsgemäß ist weiterhin vorgesehen, dass das Koppelelement um eine Kippachse verkippbar ist, die entweder parallel oder aber koaxial zu der Schwenkachse verläuft. Schaltwippe und Koppelelement können somit jeweils eine Schwenk- bzw. Kippbewegung entlang zueinander paralleler oder koaxialer Achsen durchführen, wobei die Kopplung zwischen Schaltwippe und Koppelelement über die Linearführung erfolgt. Da die Linearführung spielbehaftet ist, lassen sich Schaltwippe und Koppelelement auch dann um ihre jeweilige Achse verkippen bzw. verschwenken, wenn die beiden Achsen nicht exakt koaxial zueinander angeordnet sind.

Mit dem erfindungsgemäßen Tapetenausgleich ist die Schaltwippe auch dann sicher an dem Installationsgerät befestigt und der Schalteinsatz kann stets zuverlässig betätigt werden, wenn der Blendrahmen aufgrund der Verwendung von Tapeten von der eigentlichen Wand um eine Distanz beabstandet ist, die beispielsweise bis zu etwa 3 mm betragen kann.

Vorteilhafte Ausführungsformen der Erfindung sind in der Beschreibung, der Zeichnung sowie den Unteransprüchen beschrieben.

Nach einer ersten vorteilhaften Ausführungsform kann das Koppelelement an dem Schalteinsatz verkippbar gelagert sein. Hierdurch besitzt das Koppelelement relativ zu dem Schalteinsatz einen festgelegten Abstand, wobei gleichzeitig eine einfache Montage des Koppelelementes, beispielsweise nach erfolgter Montage des Schalteinsatzes an der Wand, möglich ist.

Nach einer weiteren vorteilhaften Ausführungsform kann die Linearführung zwei zu beiden Seiten der Kippachse des Koppelelementes angeordnete Führungselemente umfassen. Auf diese Weise ist eine gleichmäßige und sichere Führung der Schaltwippe in dem Koppelelement gewährleistet.

Nach einer weiteren vorteilhaften Ausführungsform kann das Koppelelement rahmenartig ausgebildet sein. Dies erlaubt einerseits eine materialsparende Bauweise. Andererseits kann der durch den Rahmen gebildete Freiraum dazu verwendet werden, einen Durchtritt von Licht oder Strahlung in Richtung der Schaltwippe zu ermöglichen, beispielsweise um eine Betätigung des Schalteinsatzes zu signalisieren.

Nach einer weiteren vorteilhaften Ausführungsform kann die Schaltwippe an einem Befestigungselement gelagert sein, das frontseitig in den Schalteinsatz eingesteckt ist. Hierdurch ist ein fixer Abstand zwischen Schaltwippe und Befestigungselement, jedoch ein durch das Einstecken bedingter variabler Abstand zwischen Schalteinsatz und Schaltwippe ermöglicht, da das Befestigungselement unterschiedlich tief in den Schalteinsatz eingesteckt werden kann. Wenn dabei der Blendrahmen mit Hilfe des Befestigungselementes an dem Schalteinsatz fixiert ist, lässt sich dieser durch einfaches Einstecken des Befestigungselementes an dem Schalteinsatz anbringen.

Der Schalteinsatz kann einen oder mehrere herkömmliche Schalter oder Taster umfassen. Nach einer vorteilhaften Ausführungsform können jedoch in dem Schalteinsatz auch ein oder mehrere Mikrotaster vorgesehen sein, die federbelastet sind. Falls die Rückstellkraft dieser Taster nicht ausreichend ist, kann nach einer weiteren Ausführungsform an das Befestigungselement zumindest ein Federelement angeformt sein, das eine zusätzliche Rückstellkraft auf die Schaltwippe ausübt.

Nach einer weiteren vorteilhaften Ausführungsform kann das Koppelelement in den Schalteinsatz eingeklipst sein, was eine einfache Montage ermöglicht. Auch kann der Schalteinsatz in einen Tragrahmen oder in einem Gehäuse eingeklipst sein, so dass eine Verwendung von Nieten oder dergleichen nicht erforderlich ist.

Nachfolgend wird die vorliegende Erfindung rein beispielhaft und anhand von vorteilhaften Ausführungsformen und unter Bezugnahme auf die beigefügten Zeichnungen beschrieben. Es zeigen:
- Fig. 1: eine Explosionsdarstellung eines elektrischen Installationsgerätes;
- Fig. 2: eine perspektivische Darstellung des Koppelelementes von Fig. 1;
- Fig. 3: eine perspektivische Darstellung der Schaltwippe des Installationsgerätes von Fig. 1;
- Fig. 4: eine perspektivische Vorderansicht des Befestigungselementes von Fig. 1;
- Fig. 5: eine perspektivische Vorderansicht des Schalteinsatzes von Fig. 1;
- Fig. 6: einen Schnitt durch ein an einer Wand montiertes elektrisches Installationsgerät; und
- Fig. 7: einen in der Fig. 6 entsprechenden Schnitt bei Vorhandensein von Tapeten.

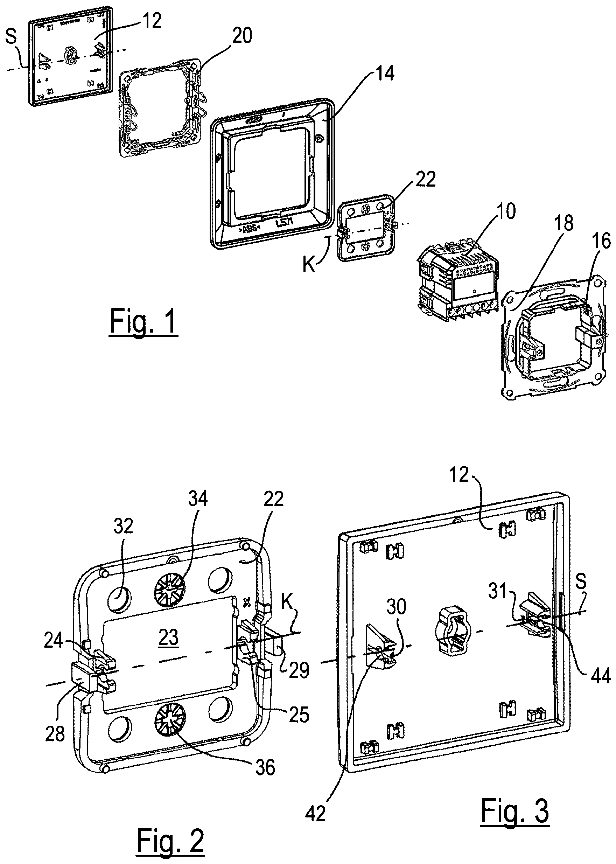

Fig. 1 zeigt eine Explosionsdarstellung eines elektrischen Installationsgerätes, das einen Schalteinsatz 10, eine Schaltwippe 12 zur Betätigung des Schalteinsatzes und einen Blendrahmen 14 für die Schaltwippe 12 umfasst. Bei dem dargestellten Ausführungsbeispiel kann der Schalteinsatz 10 in einen Adapterrahmen 16 eingeklipst werden, der wiederum in einen Tragrahmen 18 aus Metall eingeklipst ist. Zur Befestigung des Blendrahmens 14 an dem Schalteinsatz 10 ist ein Befestigungsrahmen 20 vorgesehen, der in den Adapterrahmen 16 eingesteckt werden kann und dadurch den Blendrahmen 14 an dem Tragrahmen 18, dem Adapterrahmen 16 und dem Schalteinsatz 10 fixiert. Zwischen der Schaltwippe 12 und dem Schalteinsatz 10 ist weiterhin ein Koppelelement 22 vorgesehen, das eine Bewegung der Schaltwippe 12 auf den Schalteinsatz 10 überträgt. Hierzu ist die Schaltwippe 12 um eine Schwenkachse S schwenkbar und das Koppelelement 22 ist um eine Kippachse K verkippbar, wobei die beiden Achsen im montierten Zustand des Installationsgerätes entweder koaxial oder parallel zueinander verlaufen.

Wie nachfolgend noch näher erläutert wird, ist die Schaltwippe 12 in dem Koppelelement 22 verschiebbar gelagert und zwar mittels einer spielbehafteten Linearführung, die eine Verschiebung der Schaltwippe in einer Richtung erlaubt, welche in einer zu der Schwenkachse S lotrecht verlaufenden Ebene liegt.

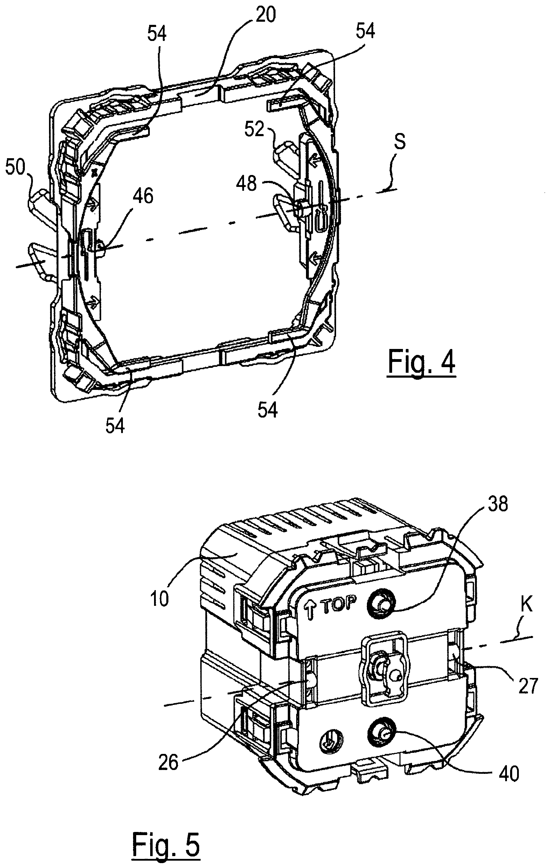

Fig. 2 zeigt eine vergrößerte Ansicht des Koppelelementes 22 von Fig. 1, das rahmenartig ausgebildet ist und dadurch ein Fenster 23 bildet, durch das sichtbare Strahlung hindurchgelangen kann. Für die verkippbare Lagerung des Koppelelementes 22 um die Kippachse K weist das Koppelelement 22 zwei Führungselemente 24 und 25 auf, die zu beiden Seiten des Fensters 23 angeordnet sind. Diese beiden Führungselemente können auf jeweils einen an den Schalteinsatz 10 angeformten Wellenzapfen 26 und 27 (Fig. 5) aufgeklipst werden, wodurch das Koppelelement 22 nicht nur an dem Schalteinsatz 10 gehalten sondern auch um die Kippachse K verkippbar ist.

An zwei gegenüberliegenden Außenseiten des Koppelelementes 22 ist seitlich neben den beiden Führungselementen 24 und 25 eine Linearführung in Form eines quaderförmigen Stegs 28 und 29 vorgesehen, dessen Längsachse die Kippachse K schneidet. Diese beiden Stege 28 und 29 sind so ausgebildet, dass sie in zwei Linearführungen 30 und 31 linear gleiten können, die an der Innenseite der Schaltwippe 12 (Fig. 3) vorgesehen sind. Hierbei erlauben die Linearführungen 30 und 31 einerseits eine lineare Relativbewegung von Schaltwippe 12 und Koppelelement 22. Andererseits ist jedoch auch eine geringfügige relative Verkippung dieser beiden Elemente zueinander möglich.

Fig. 2 verdeutlicht weiterhin, dass das Koppelelement 22 mit verschiedenen Durchtrittsöffnungen 32 versehen ist, die ein Durchtreten von Strahlung ermöglichen. In der Mitte des Koppelelementes 22 sind zwei über eine sternförmige Speichenstruktur einstückig angeformte Betätigungselemente 34, 36 vorgesehen, die bei Betätigung der Schaltwippe 12 mit einem von zwei Mikroschaltern 38 und 40 (Fig. 5) des Schalteinsatzes 10 in Anlage gelangen, um diese zu betätigen.

Fig. 3 zeigt eine vergrößerte Rückansicht der Schaltwippe 12, aus der erkennbar ist, dass im Bereich der beiden Linearführungen 30 und 31 jeweils eine Wellenaufnahme 42 und 44 angeformt ist. Diese beiden Wellenaufnahmen 42 und 44 können auf zwei Zapfen 46 und 48 (Fig. 4) des Befestigungsrahmens 20 aufgeklipst werden, so dass die Schaltwippe 12 an dem Befestigungsrahmen 20 um die Schwenkachse S verschwenkbar gelagert und fixiert ist.

Die vergrößerte Vorderansicht des Befestigungsrahmens 20 von Fig. 4 lässt erkennen, dass der Befestigungsrahmen 20 mit Hilfe von zwei Federelementen 50 und 52 aufgesteckt werden kann. Bei dem dargestellten Ausführungsbeispiel ist die Position der Federelemente 50 und 52 so gewählt, dass diese in jeweils einen Spalt eingreifen können, der zwischen dem Adapterrahmen 16 und dem Tragrahmen 18 gebildet ist, wenn der Adapterrahmen 16 in den Tragrahmen eingeklipst ist.

Ferner ist der Befestigungsrahmen 20 mit insgesamt vier angeformten Federarmen 54 versehen, die nach erfolgter Montage eine Rückstellkraft auf die Schaltwippe 12 aufbringen können.

Für eine Montage des vorstehend beschriebenen elektrischen Installationsgerätes wird zunächst (werksseitig oder vor Ort) der Adapterrahmen 16 in den Tragrahmen 18 einklipst. Anschließend kann der Schalteinsatz 10 in den Adapterrahmen 16 eingeklipst werden.

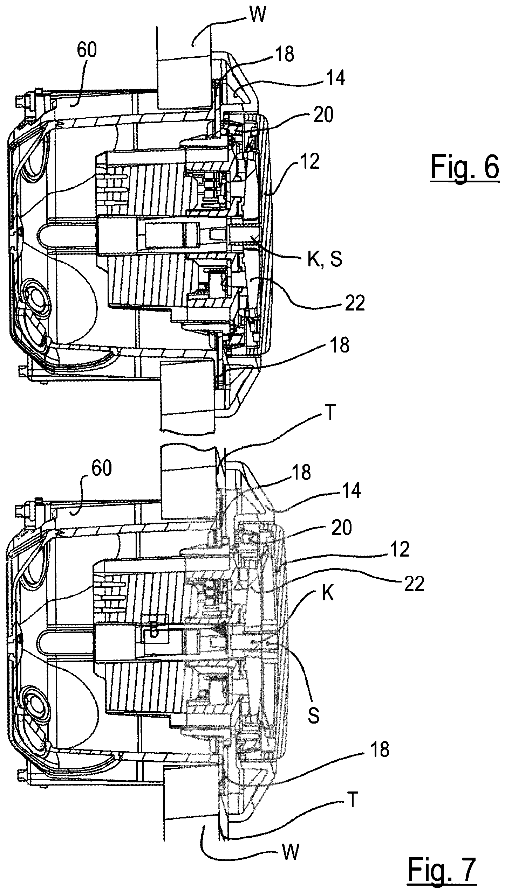

Die so vormontierte Einheit lässt sich anschließend auf an sich bekannte Weise an einer Wand W (Fig. 6 und Fig. 7) montieren, wobei der Tragrahmen 18 an der Wand W oder an einer Einbaudose 60 befestigt wird.

Nach oder auch vor diesem Schritt kann das Koppelelement 22 an dem Schalteinsatz 10 befestigt werden, indem die Führungselemente 24 und 25 auf die Wellenzapfen 26 und 27 aufgeklipst werden, so dass das Koppelelement 22 zwar um die Kippachse K verkippbar, jedoch ansonsten relativ zu dem Schalteinsatz 10 nicht mehr bewegbar befestigt ist.

Zur Befestigung des Blendrahmens 14 wird anschließend der Befestigungsrahmen 20 auf die vormontierte Einheit aus Tragrahmen 18, Schalteinsatz 10, Koppelelement 22 und Blendrahmen 14 aufgesteckt, wobei die beiden Federelemente 50 und 52 bei dem dargestellten Ausführungsbeispiel in einen Spalt zwischen Tragrahmen 18 und Adapterrahmen 16 eingesteckt werden.

Zuletzt kann die Schaltwippe 12 montiert werden, indem die Wellenaufnahmen 42 und 44 auf die Zapfen 46 und 48 des Befestigungsrahmens 20 aufgeklipst werden, so dass ein Verschwenken der Schaltwippe 12 um die Schwenkachse S möglich ist.

Die Fig. 6 und Fig. 7 verdeutlichen die Unterschiede bei der Montage entweder ohne Tapeten (Fig. 6) oder aber mit Tapeten T (Fig. 7). In beiden dargestellten Fällen liegt zwar der Tragrahmen 18 unmittelbar auf der Wand bzw. auf der Einbaudose 60 auf. Allerdings ist in der Darstellung von Fig. 7 der Blendrahmen 14 aufgrund der Tapete T weiter von der Wand W beabstandet. In dieser Einbauvariante verändert sich die Position der Kippachse K nicht, da diese durch den Schalteinsatz 10 definiert ist, dessen Lage sich auch bei Verwendung einer Tapete T nicht ändert. Allerdings hat sich die Position der Schwenkachse S um die Dicke der Tapete T in Fig. 7 nach rechts verschoben, das heißt die Schaltwippe 12 hat sich in der Linearführung 28 bis 31 in einer Richtung verschoben, die in einer zu der Schwenkachse S lotrecht verlaufenden Ebene liegt. Auch in dieser Position ist die Schaltwippe 12 fest aber schwenkbar mit dem Befestigungsrahmen 20 verbunden und bei Betätigen der Schaltwippe 12 drückt diese wiederum auf das Koppelelement 22, welches dann über die Betätigungselemente 34 und 36 eine Betätigung der Mikrotaster 38 und 40 bewirkt. Eine Rückstellung kann entweder durch die Rückstellkraft der Mikroschalter oder aber zusätzlich durch die Federarme 54 erzielt werden.

## Patentansprüche

1. Elektrisches Installationsgerät, umfassend
einen Schalteinsatz (10),
eine Schaltwippe (12) zur Betätigung des Schalteinsatzes (10), die um eine Schwenkachse (S) schwenkbar ist, und
einen Blendrahmen (14) für die Schaltwippe (12), wobei, zwischen der Schaltwippe (12) und dem Schalteinsatz (10) ein Koppelelement (22) vorgesehen ist, **dadurch gekennzeichnet, dass** die Schaltwippe (12) mittels einer spielbehafteten Linearführung (28-31) in dem Koppelelement (22) in einer Richtung verschiebbar gelagert ist, die in einer zu der Schwenkachse (S) lotrecht verlaufenden Ebene liegt, und dass das Koppelelement (22) um eine zur Schwenkachse (S) koaxial oder parallel verlaufende Kippachse (K) verkippbar ist.

2. Installationsgerät nach Anspruch 1,
**dadurch gekennzeichnet, dass**
das Koppelelement (22) an dem Schalteinsatz (10) verkippbar gelagert ist.

3. Installationsgerät nach Anspruch 1 oder 2,
**dadurch gekennzeichnet, dass**
die Linearführung (28-31) zwei zu beiden Seiten der Kippachse (K) angeordnete Führungselemente (30, 31) umfasst.

4. Installationsgerät nach zumindest einem der vorstehenden Ansprüche,
**dadurch gekennzeichnet, dass**
das Koppelelement (22) rahmenartig ausgebildet ist.

5. Installationsgerät nach zumindest einem der vorstehenden Ansprüche,
**dadurch gekennzeichnet , dass**
die Schaltwippe (12) an einem Befestigungselement (20) gelagert ist, das frontseitig in den Schalteinsatz (10) eingesteckt ist.

6. Installationsgerät nach Anspruch 5,
**dadurch gekennzeichnet , dass**
der Blendrahmen (14) mit Hilfe des Befestigungselementes (20) an dem Schalteinsatz (10) fixiert ist.

7. Installationsgerät nach Anspruch 5 oder 6,
**dadurch gekennzeichnet, dass**
an das Befestigungselement (20) zumindest ein Federelement (54) angeformt ist, das eine Rückstellkraft auf die Schaltwippe (12) ausübt.

8. Installationsgerät nach zumindest einem der vorstehenden Ansprüche,
**dadurch gekennzeichnet, dass**
das Koppelelement (22) in den Schalteinsatz (10) eingeklipst ist.

9. Installationsgerät nach zumindest einem der vorstehenden Ansprüche,
**dadurch gekennzeichnet, dass**
der Schalteinsatz (10) in einen Tragrahmen (18) oder in ein Gehäuse eingeklipst ist.

10. Installationsgerät nach zumindest einem der vorstehenden Ansprüche,
**dadurch gekennzeichnet, dass**
der Schalteinsatz (10) zumindest einen Taster (38, 40) umfasst.

## Claims

1. An electrical installation device comprising
a switch insert (10);
a rocker (12) for actuating the switch insert (10), said rocker (12) being pivotable about a pivot axis (S); and
a frame (14) for the rocker (12),
wherein a coupling element (22) is provided between the rocker (12) and the switch insert (10), **characterized in that**,
by means of a linear guide (28-31) having play, the rocker (12) is displaceably supported in the coupling element (22) in a direction which lies in a plane perpendicular to the pivot axis (S), and
**in that** the coupling element (22) can be tilted about a tilt axis (K) extending coaxially to or in parallel with the pivot axis (S).

2. An installation device in accordance with claim 1,
**characterized in that**
the coupling element (22) is supported in a tiltable manner at the switch insert (10).

3. An installation device in accordance with claim 1 or claim 2,
**characterized in that**
the linear guide (28-31) comprises two guide elements (30, 31) arranged at both sides of the tilt axis (K).

4. An installation device in accordance with at least one of the preceding claims,
**characterized in that**
the coupling element (22) is frame-like.

5. An installation device in accordance with at least one of the preceding claims,
**characterized in that**
the rocker (12) is supported at a fastening element (20) which is plugged at the front side into the switch insert (10).

6. An installation device in accordance with claim 5,
**characterized in that**
the frame (14) is fixed to the switch insert (10) by means of the fastening element (20).

7. An installation device in accordance with claim 5 or claim 6,
**characterized in that**
at least one spring element (54) is molded to the fastening element (20) and exerts a return force on the rocker (12).

8. An installation device in accordance with at least one of the preceding claims,
**characterized in that**
the coupling element (22) is clipped into the switch insert (10).

9. An installation device in accordance with at least one of the preceding claims,
**characterized in that**
the switch insert (10) is clipped into a support frame (18) or into a housing.

10. An installation device in accordance with at least one of the preceding claims,
**characterized in that**
the switch insert (10) comprises at least one push-button (38, 40).

## Revendications

1. Appareil d'installation électrique, comprenant
un insert de commutation (10),
une bascule de commutation (12) pour actionner l'insert de commutation (10), qui peut pivoter autour d'un axe de pivotement (S), et
un cadre dormant (14) pour la bascule de commutation (12),
un élément de couplage (22) étant prévu entre la bascule de commutation (12) et l'insert de commutation (10),
**caractérisé en ce que**
la bascule de commutation (12) est montée dans l'élément de couplage (22) de manière à pouvoir coulisser dans une direction qui se situe dans un plan perpendiculaire à l'axe de pivotement (S), au moyen d'un guidage linéaire (28-31) avec jeu, et
l'élément de couplage (22) peut être basculé autour d'un axe de basculement (K) coaxial ou parallèle à l'axe de pivotement (S).

2. Appareil d'installation selon la revendication 1,
**caractérisé en ce que**
l'élément de couplage (22) est monté avec faculté de basculement sur l'insert de commutation (10).

3. Appareil d'installation selon la revendication 1 ou 2,
**caractérisé en ce que**
le guidage linéaire (28-31) comprend deux éléments de guidage (30, 31) disposés de part et d'autre de l'axe de basculement (K).

4. Appareil d'installation selon l'une au moins des revendications précédentes, **caractérisé en ce que**
l'élément de couplage (22) est réalisé en forme de cadre.

5. Appareil d'installation selon l'une au moins des revendications précédentes, **caractérisé en ce que**
la bascule de commutation (12) est montée sur un élément de fixation (20) qui est enfiché côté frontal dans l'insert de commutation (10).

6. Appareil d'installation selon la revendication 5,
**caractérisé en ce que**
le cadre dormant (14) est fixé à l'insert de commutation (10) à l'aide de l'élément de fixation (20).

7. Appareil d'installation selon la revendication 5 ou 6,
**caractérisé en ce que**
au moins un élément élastique (54) est conformé sur l'élément de fixation (20), lequel exerce une force de rappel sur la bascule de commutation (12).

8. Appareil d'installation selon l'une au moins des revendications précédentes, **caractérisé en ce que**
l'élément de couplage (22) est clipsé dans l'insert de commutation (10).

9. Appareil d'installation selon l'une au moins des revendications précédentes, **caractérisé en ce que**
l'insert de commutation (10) est clipsé dans un cadre de support (18) ou dans un boîtier.

10. Appareil d'installation selon l'une au moins des revendications précédentes, **caractérisé en ce que**
l'insert de commutation (10) comprend au moins un bouton-poussoir (38, 40).
